# EUROPÄISCHE PATENTSCHRIFT

(11) **EP 3 234 471 B1**
(45) Veröffentlichungstag und Bekanntmachung des Hinweises auf die Patenterteilung: **02.12.2020**
(21) Anmeldenummer: 15816143.0
(22) Anmeldetag: 16.12.2015
(51) Int. Cl.: F24D 3/16, F24D 3/14, F24F 5/00, F28F 3/02, F28F 1/16, F24F 13/22

(54) **DECKENRADIATORPROFIL**
PROFILED CEILING RADIATOR ELEMENT
PROFILÉ DE RADIATEUR DE PLAFOND

(30) Priorität: 19.12.2014 DE 102014226713
(43) Veröffentlichungstag der Anmeldung: 25.10.2017
(73) Patentinhaber: Klix, Uwe, 10179 Berlin (DE)
(72) Erfinder: Klix, Uwe, 10179 Berlin (DE)
(74) Vertreter: Patentanwälte Behrmann Wagner PartG mbB
(86) Internationale Anmeldenummer: PCT/EP2015/080109
(87) Internationale Veröffentlichungsnummer: WO 2016/097066

(56) Entgegenhaltungen:
- EP-A1- 2 468 973
- CH-A2- 706 198
- CH-A2- 707 080
- DE-A1- 2 659 582
- DE-A1- 4 005 914
- DE-B3-102005 061 069
- DE-U1-202010 003 439
- GB-A- 2 262 548

## Beschreibung

Die Erfindung betrifft ein Deckenradiatorprofil gemäß dem Oberbegriff des Patentanspruchs 1.

Bekannt sind Deckenradiatorprofile für die Beheizung oder Kühlung von Räumen mit wenigstens einem Rohr für ein Heiz- oder Kühlmedium und wenigstens zwei Strahlflächen.

Beispielsweise offenbart die EP 0 866 938 B1 einen Deckenradiator für die Beheizung oder Kühlung von Räumen mit mindestens einem Durchflussrohr für ein Heiz- oder Kühlmedium und einem Halter, wobei das Durchflussrohr mittels des Halters unterhalb einer Raumdecke aufhängbar ist, wobei von dem Durchflussrohr zumindest drei bogenartige oder flache Strahlplatten strahlenförmig und radial abstehen. Bei vielen derartigen Strahlplatten ergibt sich eine etwa x-förmige Ausgestaltung des Querschnitts des Deckenradiatorprofils.

Wird das Rohr von einem Heizmedium durchflossen, wird Wärme auf die Strahlplatten übertragen und von dort abgestrahlt. Entsprechend kann bei Durchfluss eines Kühlmediums durch das Rohr eine Kühlung des Raums erfolgen. Vorzugsweise erfolgt eine Zufuhr von Luft auf das Deckenradiatorprofil. Dabei wird insbesondere an einer oder nur wenigen Stellen in Längsrichtung des Deckenradiatorprofils Luft zugeführt, welche sich aufgrund des Coandä-Effekts entlang des Deckenradiatorprofils verteilt, so dass eine Luftabgabe an den Raum über die gesamte Profillänge erfolgen kann.

Aus der EP 2 468 973 A1 ist ein Profil mit zwei beabstandeten, parallelen Flächen bekannt, wobei in dem Profil ein von dem Profil separates Rohr klemmend gehalten werden kann. Dieses Dokument offenbart den Oberbegriff des unabhängigen Anspruchs 1.

Aus der GB 2 262 548 A ist ein Strangpressprofil mit einem integrierten Rohr bekannt, wobei zwei seitliche, parallele Flächenabschnitte über Verbindungsstege miteinander verbunden sind.

Aus der CH 707 080 A2 ist eine Baugruppe zum Kühlen und/oder Heizen bekannt, umfassend ein metallisches Element, an dem eine hiervon separate Rohrleitung gehalten werden kann.

Aus der DE 40 05 914 A1 sind diverse Ausführungsformen von Heizprofilen bekannt.

Die CH 706 198 A2 beschreibt ein Strangpressprofil zur Aufnahme eines hiervon separaten Rohres zu Kühl- und Heizzwecken.

Die DE 26 59 582 A1 beschreibt eine Ausrichteinrichtung für Radiatoren.

Die DE 10 2005 061 069 B3 beschreibt ein im Wesentlichen dreieckiges Profilelement als Deckenradiator.

Die DE 20 2010 003 439 U1 beschreibt einen sogenannten Dunkelstrahler.

Die Aufgabe der Erfindung besteht darin, ein Deckenradiatorprofil weiterzubilden, insbesondere derart, dass es eine verbesserte Luftverteilung ermöglicht.

Die Aufgabe wird erfindungsgemäß gelöst durch ein Deckenradiatorprofil mit den Merkmalen des Anspruchs 1.

Vorteilhafte Ausgestaltungen und Weiterbildungen der Erfindung sind in den abhängigen Ansprüchen angegeben.

Das erfindungsgemäße Deckenradiatorprofil für die Beheizung oder Kühlung von Räumen mit wenigstens einem Rohr für ein Heiz- oder Kühlmedium und wenigstens zwei Strahlflächen zeichnet sich dadurch aus, dass die zwei Strahlflächen im Wesentlichen parallel zueinander in einem Abstand angeordnet sind und über wenigstens einen Verbindungssteg miteinander verbunden sind, wobei das Rohr in oder an dem wenigstens einen Verbindungssteg angeordnet ist. Durch die zwei parallel zueinander in einem Abstand angeordneten Strahlflächen und den Verbindungssteg werden zwei Luftkanäle gebildet, welche an drei Seiten geschlossen sind, nämlich die jeweils durch den Verbindungsteg sowie einen Teil der zwei Strahlflächen, an einer Seite jedoch offen ausgebildet ist. In derartigen Luftkanälen kann sich bei Luftströmung besonders vorteilhaft über den Coand 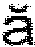 -Effekt die Luft ausbreiten, so dass eine Luftabgabe über die gesamte Profillänge begünstigt wird. Durch den Luftstrom entlang des Deckenradiatorprofils kann es weiterhin ermöglicht werden, eine Kondensatbildung unterhalb der Taupunktgrenze laufend wegzublasen, insbesondere in den Raum zurückzublasen. Dadurch kann es zudem ermöglicht werden, im Kühlbetrieb eine Kühlflüssigkeit mit einer Temperatur unterhalb des Taupunkts zu verwenden und dadurch die Kühlleistung des Deckenradiatorprofils um das Dreifache zu erhöhen bzw. die Länge der Deckenradiatorprofile auf ein Drittel zu verkürzen und somit Material einzusparen. Bei dem Heiz- oder Kühlmedium kann es sich um ein gasförmiges, flüssiges oder festes Medium handeln. Das Rohr kann von einem warmen oder kalten Gas oder einer warmen oder kalten Flüssigkeit durchströmt werden oder auch mit einem Medium wie beispielsweise Öl, Sand oder Porzellan gefüllt sein, in welches ein elektrischer Leiter einer elektrischen Heizung eingebettet ist, mittels welchem das Rohr gekühlt oder geheizt werden kann.

Die Strahlflächen können dabei vorteilhafterweise sowohl im Wesentlichen eben als auch zumindest abschnittsweise oder über die gesamte Breite leicht gekrümmt, insbesondere in Bezug aufeinander konvex gekrümmt, ausgebildet sein.

Erfindungsgemäß sind die beiden Strahlflächen über einen ersten und einen zweiten Verbindungssteg miteinander verbunden, welche in Bezug aufeinander konvex ausgebildet sind. Durch eine derartige Ausgestaltung der Verbindungsstege, wobei das wenigstens eine Rohr vorzugsweise zwischen den beiden Verbindungsstegen angeordnet ist, kann die Ausbildung des Coand 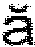 -Effekts weiter begünstigt werden.

Vorteilhafterweise weisen die beiden Strahlflächen mit dem wenigstens einen Verbindungssteg eine etwa H-förmige Ausgestaltung auf.

Gemäß einer bevorzugten Ausführungsform der Erfindung weist der Verbindungssteg einen ersten Abschnitt und einen zweiten Abschnitt auf, zwischen welchen das Rohr angeordnet ist. Das Rohr ist damit in dem Verbindungssteg angeordnet und insbesondere zu beiden Strahlflächen beabstandet angeordnet, nämlich über die beiden Abschnitte des Verbindungsstegs. Eine derartige Ausgestaltung kann besonders materialsparend sein.

Eine vorteilhafte Weiterbildung der Erfindung sieht vor, dass die Strahlflächen über einen ersten und einen zweiten Verbindungssteg miteinander verbunden sind, wobei jeder der Verbindungsstege jeweils einen ersten Abschnitt und einen zweiten Abschnitt aufweisen, zwischen welchen das Rohr angeordnet ist. Auch in dieser Ausführungsform ist das Rohr in den beiden Verbindungsstegen angeordnet und über die Abschnitte insbesondere beabstandet zu den Strahlflächen angeordnet.

Durch die beiden Verbindungsstege mit jeweils einem ersten und einem zweiten Abschnitt wird ein Doppelsteg gebildet, welcher die Stabilität erhöhen kann. Zudem wird es ermöglicht, die Kontur der Fläche zwischen den beiden Strahlflächen mit weniger starken Krümmungen auszubilden, was sich begünstigend auf die Auswirkung des Coand 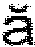 -Effekts auswirken kann.

Eine besonders bevorzugte Ausführungsform der Erfindung sieht vor, dass die Strahlflächen über einen ersten und einen zweiten Verbindungssteg miteinander verbunden sind, welche an dem wenigsten einen Rohr, vorzugsweise an etwa diametral gegenüberliegenden Stellen, anliegen. Das Rohr ist somit an dem ersten Verbindungssteg und an dem zweiten Verbindungssteg angeordnet und insbesondere zwischen dem ersten und dem zweiten Verbindungssteg angeordnet. Dadurch wird es ermöglicht, die Kontur zu der Fläche zwischen den beiden Strahlflächen nur durch den ersten bzw. den zweiten Verbindungssteg zu bilden, was eine Ausbildung der Flächen mit nur geringen Krümmungen ermöglicht.

Je nach Anwendungsfall und benötigter Heiz- oder Kühlleistung kann eine geeignete Anzahl an Rohren für das Deckenradiatorprofil gewählt werden. Vorzugsweise weist das Deckenradiatorprofil ein, zwei oder drei Rohre auf.

Vorteilhafterweise ist das Deckenradiatorprofil spielsymmetrisch ausgebildet, vorzugsweise sowohl zu einer Achse parallel zu den Strahlflächen als auch zu einer Achse senkrecht zu den Strahlflächen. Dies kann die Montage vereinfachen sowie eine gleichmäßige Luftverteilung in beide Richtungen quer zum Deckenradiatorprofil begünstigen.

Vorzugsweise weisen die Strahlflächen zwei Stirnkanten und zwei Seitenkanten auf, wobei der wenigstens eine Verbindungssteg etwa symmetrisch zwischen den beiden Seitenkanten angeordnet ist. Dies kann die gleichmäßige Luftverteilung zu beiden Seiten quer zur Längsachse des Deckenradiatorprofils begünstigen.

Gemäß einer bevorzugten Ausführungsform der Erfindung weisen die Strahlflächen im Bereich der zwei Stirnkanten jeweils eine Nut auf, welche vorzugsweise den Querschnitt eines Kreisabschnitts aufweist. Die Nuten ermöglichen es, beabstandet zum Verbindungssteg und etwa parallel zu diesem ausgerichtet eine Platte zwischen die beiden Strahlflächen einzusetzen. Dies erfolgt in der Regel nur über einen geringen Abschnitt der Gesamtlänge des Deckenradiatorprofils. An dieser Stelle wird ein geschlossener Kanal ausgebildet. An der Platte kann beispielsweise ein Ventilator angeordnet sein, welcher der Luftzufuhr dient. Alternativ kann an einer derartigen Platte auch eine Stauscheibe, eine Ausweisplatte oder eine Umlenkplatte angeordnet sein, welche die Strömung in dem Kanal entsprechend beeinflussen, beispielsweise stauen, abweisen oder umlenken. Der Querschnitt eines Kreisabschnitts weist den Vorteil auf, dass stabförmige Elemente mit einem kreisförmigen Querschnitt in diese Nuten eingeschoben werden können, beispielsweise entweder um die Einschubplatten zu befestigen oder auch um stirnseitig aneinander grenzende Deckelradiatorprofile miteinander zu verbinden.

Vorzugsweise weist wenigstens eine der Strahlflächen auf der der jeweils anderen Strahlflächen abgewandten Seite, vorzugsweise in dem Bereich, in welchem auf der der jeweils anderen Strahlfläche zugewandten Seite der wenigstens eine Verbindungssteg angeordnet ist, eine Befestigungsnut auf, welche vorzugsweise den Querschnitt eines Kreisabschnitts aufweist. In die Befestigungsnut kann ein Befestigungselement zum Befestigen des Deckenradiatorprofils an der Raumdecke angeordnet werden, insbesondere durch Einschieben in die Nut, was eine einfache Montage ermöglicht. Der Querschnitt eines Kreisabschnitts weist den Vorteil auf, dass stabförmige Elemente mit dem Querschnitt eines Kreises in die Befestigungsnut eingeschoben werden können, beispielsweise um die Befestigungselemente zur Befestigung des Deckenradiatorprofils an der Raumdecke einzuschieben oder auch zwei Deckenradiatorprofile stirnseitig miteinander verbinden zu können.

Vorzugsweise weisen die Strahlflächen jeweils zwei Elemente auf, die an den Seitenkanten im spitzen Winkel zueinander angeordnet sind und dort vorzugsweise eine abgerundete Verbindungsstelle aufweisen. Dies ermöglicht eine Rückführung von auf der der jeweils anderen Strahlfläche abgewandten Außenfläche der Strahlfläche anfallendem Kondensats auf die der jeweils anderen Strahlfläche zugewandte Seitenfläche der Strahlfläche oder umgekehrt und von einer oberen Strahlfläche weiter an den Verbindungssteg, wo ggf. eine erneute Verdampfung stattfinden kann.

Das Deckenradiatorprofil kann aus Platten zusammengesetzt werden, die beispielsweise miteinander verschweißt oder verstemmt werden.

Das Deckenradiatorprofil ist vorteilhafterweise als Strangpressprofil, vorzugsweise aus Aluminium, hergestellt. Die Herstellung als Strangpressprofil ermöglicht eine kostengünstige Herstellung von Deckenradiatorprofilen beliebiger Länge. Die Verwendung von Aluminium ermöglicht ein geringes Gewicht der Deckenradiatorprofile und erleichtert die Montage damit weiter.

Stirnseitig ist vorteilhafterweise ein Abschlussdeckel zum Abschluss des Deckenradiatorprofils angeordnet.

Vorzugsweise weist das Deckenradiatorprofil eine eloxierte oder lackierte Oberfläche auf, um die Strahlungseigenschaften des Deckenradiatorprofils entsprechend beeinflussen zu können.

Die Erfindung wird anhand der nachfolgenden Figuren ausführlich erläutert. Es zeigen:
Fig. 1 einen Querschnitt durch ein Deckenradiatorprofil gemäß einem ersten nicht erfindungsgemäßen Ausführungsbeispiels,
Fig. 2 einen Querschnitt durch ein Deckenradiatorprofil gemäß einem zweiten nicht erfindungsgemäßen Ausführungsbeispiel,
Fig. 3 einen Querschnitt durch ein Deckenradiatorprofil gemäß einem dritten nicht erfindungsgemäßen Ausführungsbeispiel,
Fig. 4 einen Querschnitt durch das Deckenradiatorprofil gemäß Fig. 2 mit zwei eingesetzten Platten,
Fig. 5 einen Querschnitt durch das Deckenradiatorprofil gemäß Fig. 3 mit einer eingesetzten Platte,
Fig. 6 einen Querschnitt durch ein Deckenradiatorprofil gemäß einem vierten nicht erfindungsgemäßen Ausführungsbeispiel,
Fig. 7 einen Querschnitt durch ein Deckenradiatorprofil gemaß einem fünften nicht erfindungsgemäßen Ausführungsbeispiel,
Fig. 8 einen Querschnitt durch ein Deckenradiatorprofil gemäß einem sechsten nicht erfindungsgemäßen Ausführungsbeispiel,
Fig. 9 einen Querschnitt durch ein Deckenradiatorprofil gemäß einem siebten nicht erfindungsgemäßen Ausführungsbeispiel,
Fig. 10 einen Querschnitt durch ein Deckenradiatorprofil gemäß einem achten nicht erfindungsgemäßen Ausführungsbeispiel,
Fig. 11 einen Querschnitt durch ein Deckenradiatorprofil gemäß einem ersten Ausführungsbeispiel der Erfindung,
Fig. 12 einen Querschnitt durch ein Deckenradiatorprofil gemäß einem zweiten Ausführungsbeispiel der Erfindung,
Fig. 13 einen Querschnitt durch ein Deckenradiatorprofil gemäß einem dritten Ausführungsbeispiel der Erfindung,
Fig. 14a eine schematische Darstellung einer ersten Anordnung von erfindungsgemäßen Deckenradiatorprofilen in einem Raum in einer Ansicht von unten,
Fig.14b eine schematische Darstellung der Anordnung von Deckenradiatorprofilen gemäß Fig. 14a in einer Seitenansicht,
Fig. 15a eine schematische Darstellung einer zweiten Anordnung von erfindungsgemäßen Deckenradiatorprofilen in einem Raum in einer Ansicht von unten,
Fig. 15b eine schematische Darstellung der Anordnung der Deckenradiatorprofile gemäß Fig. 15a in einer Seitenansicht,
Fig. 16a eine schematische Darstellung einer dritten Anordnung von Deckenradiatorprofilen in einem Raum in einer Ansieht von unten und
Fig. 16b eine schematische Darstellung der Anordnung von Deckenradiatorprofilen gemäß Fig. 16a in einer Seitenansicht.

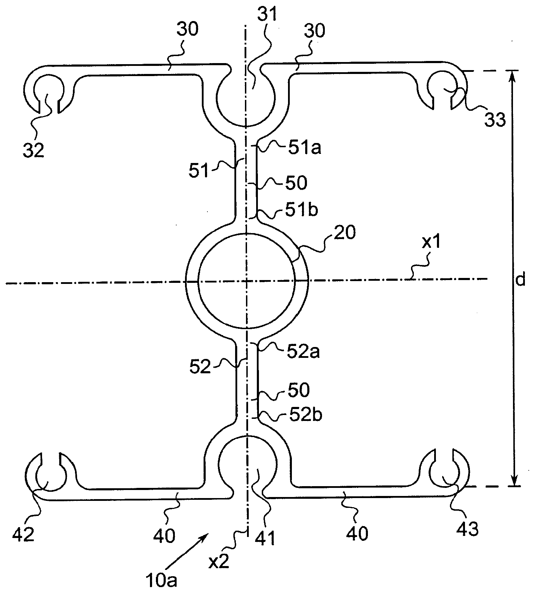

Figur 1 zeigt einen Querschnitt durch ein erstes nicht erfindungsgemäßes Ausführungsbeispiel eines Deckenradiatorprofils 10a, welches ein Rohr 20 und zwei in einem Abstand d angeordnete, im Wesentlichen parallel zueinander angeordnete, Strahlflächen 30, 40 aufweist. Die Strahlflächen 30, 40 in dem dargestellten Ausführungsbeispiel sind eben ausgebildet, können alternativ aber auch leicht gekrümmt, insbesondere in Bezug aufeinander konvex gekrümmt, ausgebildet sein. Die beiden Strahlflächen 30, 40 sind über einen Verbindungssteg 50, dessen Längsrichtung im Wesentlichen senkrecht zu den Strahlflächen 30, 40 ausgerichtet sein kann, miteinander verbunden. Dadurch ergibt sich insgesamt eine H-förmige Anordnung.

Der Verbindungssteg 50 weist einen ersten Abschnitt 51 und einen zweiten Abschnitt 52 auf, zwischen welchen das Rohr 20 angeordnet ist. Dazu weist insbesondere der erste Abschnitt 51 ein erstes Ende 51a und ein zweites Ende 51b auf, während der zweite Abschnitt 52 ein erstes Ende 52a und ein zweites Ende 52b aufweist, wobei das erste Ende 51a des ersten Abschnitts 51 an der Strahlfläche 30, das zweite Ende 51b des ersten Abschnitts 51 an dem Rohr 20, das erste Ende 52a des zweiten Abschnitts 52 an dem Rohr 20, insbesondere etwa diametral gegenüber der Verbindungsstelle zwischen dem Rohr 20 und dem ersten Abschnitt 51, und das zweite Ende 52b des zweiten Abschnitts 52 an der Strahlfläche 40 angeordnet ist.

Die Strahlfläche 30 kann entlang zweier Seitenkanten, welche insbesondere parallel zueinander ausgerichtet sind, jeweils eine Nut 32, 33 aufweisen. Die Strahlfläche 40 kann entlang zweier Seitenkanten, welche im Wesentlichen parallel zueinander ausgerichtet sind, jeweils eine Nut 42, 43 aufweisen. Die Nuten 32, 33, 42, 43 können insbesondere zur jeweils gegenüberliegenden Strahlfläche 40, 30 offen ausgebildet sein und können weiterhin eine Querschnitt eines Kreisabschnitts aufweisen .

Die Strahlfläche 30 kann einen Befestigungsnut 31 aufweisen, welche zu der Strahlfläche 40 abgewandten Außenfläche der Strahlfläche 30 offen ausgebildet ist. Die Befestigungsnut 31 kann zum Befestigen des Deckenradiatorprofils 10a an der Decke eines Raums dienen, beispielsweise derart, dass Befestigungselemente in die Befestigungsnut 31 eingeschoben werden. Die Befestigungsnut 31 kann einen Querschnitt in Form eines Kreisabschnitts aufweisen, wodurch insbesondere stabförmige Elemente in die Befestigungsnut 31 eingeschoben werden können, einerseits, um das Deckenradiatorprofil 10a an der Decke befestigen zu können, andererseits aber auch, um beispielsweise zwei Deckenradiatorprofile 10a stirnseitig miteinander verbinden zu können. Die Strahlfläche 40 kann in analoger Weise eine Befestigungsnut 41 aufweisen, welche zur der Strahlfläche 30 abgewandten Außenfläche der Strahlfläche 40 offen ausgebildet ist und vorteilhafterweise ebenfalls den Querschnitt eines Kreisabschnitts aufweist.
Das Deckenradiatorprofil 10a ist insbesondere spiegelsymmetrisch ausgebildet, beispielsweise zu einer Achse xl, welche parallel zu den Strahlflächen 30, 40 ausgerichtet ist, und/oder zu einer Achse x2, welche insbesondere senkrecht zu den Strahlflächen 30, 40 ausgerichtet ist.

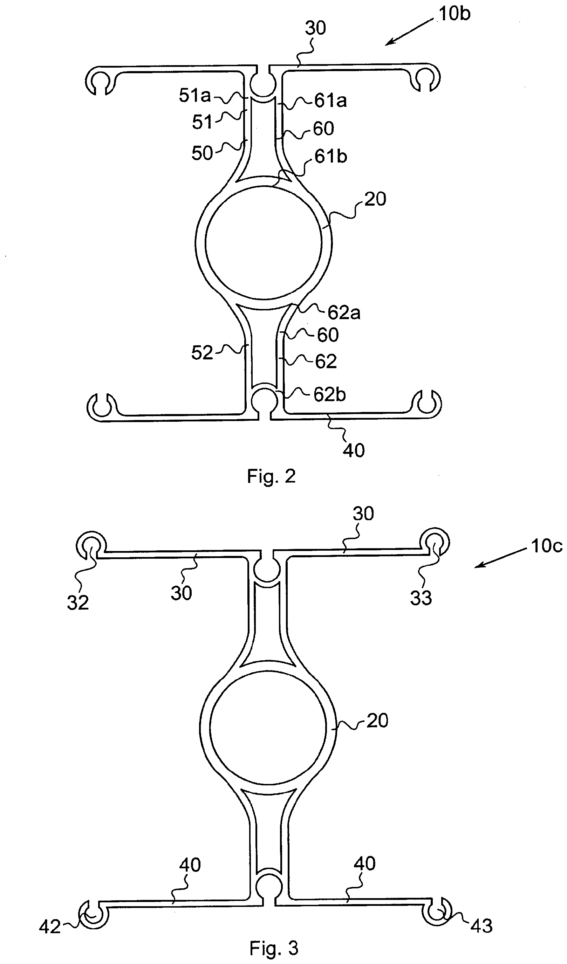

Figur 2 zeigt den Querschnitt eines zweiten nicht erfindungsgemäßen Ausführungsbeispiels eines Deckenradiatorprofils 10b, welches sich von dem in Figur 1 dargestellten Deckenradiatorprofil 10a im Wesentlichen dadurch unterscheidet, dass zusätzlich zu dem Verbindungssteg 50 ein zweiter Verbindungssteg 60 vorhanden ist, welcher einen ersten Abschnitt 61 und eine zweiten Abschnitt 62 aufweist. Das Rohr 20 ist zwischen dem ersten Abschnitt 61 und dem zweiten Abschnitt 62 angeordnet. Dazu weist insbesondere der erste Abschnitt 61 ein erstes Ende 61a und zweites Ende 61b auf, während der zweite Abschnitt 62 ein erstes Ende 62a und ein zweites Ende 62b aufweist, wobei das erste Ende 61a des ersten Abschnitts 61 mit der Strahlfläche 30, das zweite Ende 61b des ersten Abschnitts mit dem Rohr 20, das erste Ende 62a des zweiten Abschnitts 62 mit dem Rohr 20, insbesondere diametral gegenüberliegend der Verbindungsstelle zwischen dem Rohr 20 und dem ersten Abschnitt 61, und das zweite Ende 62b des zweiten Abschnitts 62 mit der Strahlfläche 40 verbunden ist. Die Verbindungsstege 50, 60 bilden insbesondere einen Doppelsteg.

Das in Figur 3 dargestellte nicht erfindungsgemäße Ausführungsbeispiel eines Deckenradiatorprofils 10c unterscheidet sich von dem in Figur 2 dargestellten Ausführungsbeispiel des Deckenradiatorprofils 10b im Wesentlichen durch die Anordnung der Nuten 32, 33 der Strahlfläche 30 bzw. der Nuten 42, 43 der Strahlfläche 40. Während in dem in den Figuren 1 und 2 dargestellten Deckenradiatorprofilen 10a, 10b die Nuten 32, 33 derart ausgebildet sind, dass die Seitenflächen der Nuten in den Raum zwischen den beiden Strahlflächen 30, 40 hineinragen, sind bei dem in Figur 3 dargestellten Ausführungsbeispiel die Nuten 32, 33, 42, 43 derart ausgerichtet, dass die Öffnung der Nuten 32, 33 im Wesentlichen in der Strahlfläche in der Ebene der Strahlfläche 30 und die Öffnung der Nuten 42, 43 in der Ebene der Strahlfläche 40 zu liegen kommen und somit die Begrenzungswände der Nuten 32, 33 an der Strahlfläche 30 auf der der Strahlfläche 40 abgewandten Außenfläche hervorstehen, während die Begrenzungswände der Nuten 42, 43 an der Strahlfläche 40 auf der der Strahlfläche 30 abgewandten Außenfläche der Strahlfläche 40 hervorragen.

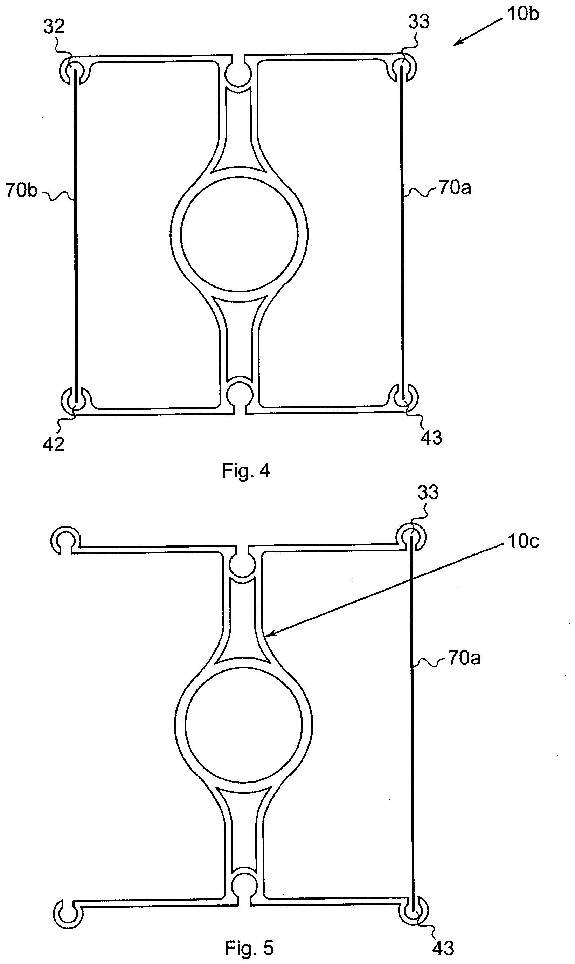

Figur 4 zeigt das Deckenradiatorprofil 10b gemäß Figur 2 mit in die Nuten 32, 33, 42, 43 eingeschobenen Platten 70a, 70b. Dabei ist die Platte 70a in die Nuten 33, 43 derart eingeschoben, dass ein zwischen der Strahlfläche 30 und 40 sowie den Verbindungssteg 50, 60 gebildeter Luftkanal geschlossen wird. Dies erfolgt in der Regel nur über einen Abschnitt der Länge des Deckenradiatorprofils 20b. An der Platte 70a kann beispielsweise ein Ventilator angeordnet sein, um Luft in den Luftkanal einzublasen. Alternativ oder zusätzlich kann an der Platte 70a eine Stauscheibe, ein Abweis- oder ein Umlenkblech angeordnet sein, welche die Luftströmung stauen, abweisen oder umlenken und welche insbesondere quer zu den Strahlflächen 30, 40 und quer zu den Verbindungsstegen 50, 60 angeordnet sind. In analoger Weise kann die weitere Platte 70b in die Nuten 32, 42 eingesetzt werden und ähnliche Funktionalitäten wie die Platte 70a aufweisen.

Figur 5 zeigt das Deckenradiatorprofil 10c gemäß Figur 3, in welches in die Nuten 43, 33, 43 eine Platte 70a eingesetzt ist.

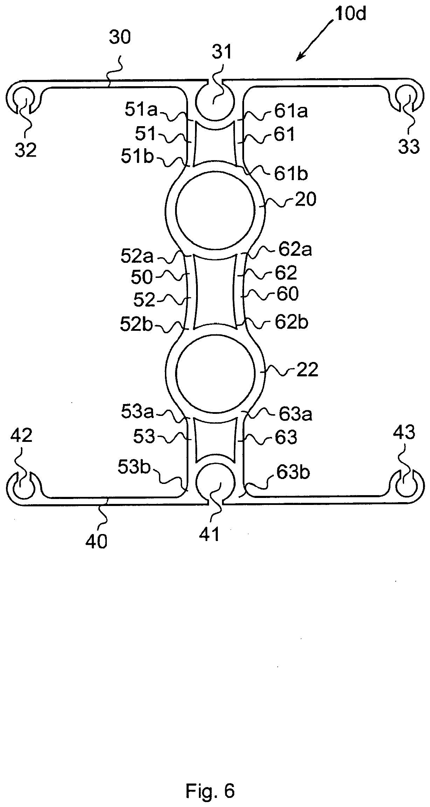

Figur 6 zeigt ein viertes nicht erfindungsgemäßes Ausführungsbeispiel eines Deckenradiatorprofils 10d, welches sich von dem in Figur 2 dargestellten Ausführungsbeispiel im Wesentlichen dadurch unterscheidet, dass in den zwei Verbindungsstegen 50, 60 neben dem Rohr 20 noch ein zweites Rohr 22, welches insbesondere parallel zu dem Rohr 20 verlaufen ausgerichtet ist, angeordnet ist. Der Verbindungssteg 50 weist dazu neben dem ersten Abschnitt 51 und dem zweiten Abschnitt 52 einen dritten Abschnitt 53 auf, welcher ein erstes Ende 53a und ein zweites Ende 53b aufweist, wobei das zweite Ende 52b des zweiten Abschnitts 52 statt mit der Strahlfläche 40 mit dem zweiten Rohr 22 verbunden ist und das erste Ende 53a des dritten Abschnitts 53 mit dem zweiten Rohr 22 sowie das zweite Ende 53b des zweiten Abschnitts 53 mit der Strahlfläche 40 verbunden ist. In analoger Weise weist der zweite Verbindungssteg 60 neben dem ersten Abschnitt 61 und dem zweiten Abschnitt 62 einen dritten Abschnitt 63 mit einem ersten Ende 63a und einem zweiten Ende 63b auf, wobei das zweite Ende 62b des zweiten Abschnitts 62 statt mit der Strahlfläche 40 mit dem zweiten Rohr 22 verbunden ist, während das erste Ende 63a des dritten Abschnitts 63 mit dem zweiten Rohr 22 und das zweite Ende 63b des dritten Abschnitts 63 mit der Strahlfläche 40 verbunden ist.

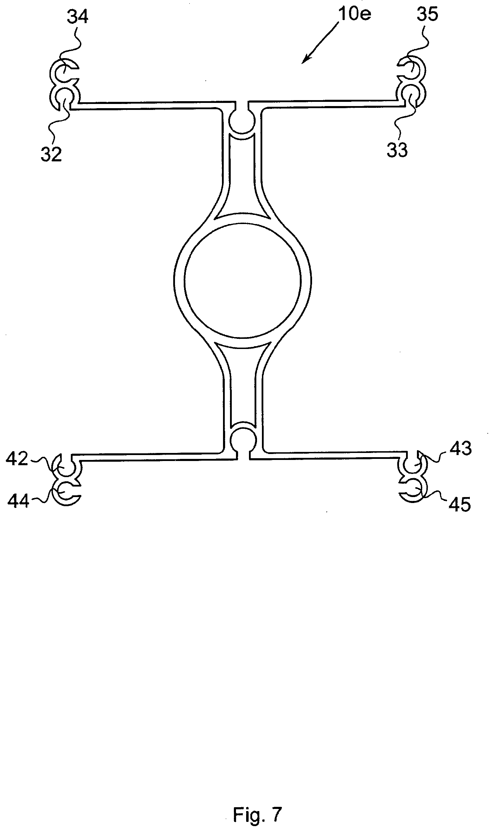

Figur 7 zeigt ein fünftes nicht erfindungsgemäßes Ausführungsbeispiel eines Deckenradiatorprofils 10e, welches sich von dem in Figur 3 dargestellten Deckenradiatorprofil 10c im Wesentlichen dadurch unterscheidet, dass an dem dem offenen Ende der Nuten 32, 33, 42, 43 abgewandten Boden der Begrenzungsflächen der Nuten 32, 33, 42, 43 Begrenzungsflächen für jeweils eine weitere Nut 34, 35, 44, 45 angeordnet sind. Die an der Nut 32 angeordnete Nut 34 und die an der Nut 33 angeordnete Nut 35 sind dabei an den einander zugewandten Seiten offen. Dadurch wird es ermöglicht, in die Nuten 34, 35 eine Platte derart einzuschieben, dass ein Luftkanal zwischen der Außenfläche der Strahlfläche 30 und den Begrenzungswänden der Nuten 32, 33 geschlossen wird, um Luft gezielt durch diesen Kanal leiten zu können, beispielsweise um Kondensat wegzublasen oder zu verdampfen. Weiterhin sind analog vorteilhafterweise die an der Nut 42 angeordnete Nut 44 und die an der Nut 43 angeordnete Nut 45 an den einander zugewandten Seiten offen ausgebildet.

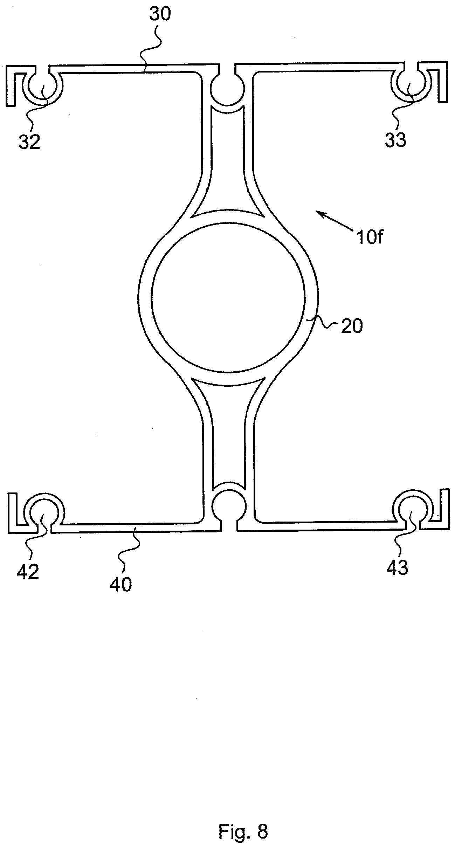

Figur 8 zeigt einen Querschnitt durch ein sechstes nicht erfindungsgemäßes Ausführungsbeispiel eines Deckenradiatorprofils 10f, welches sich von dem in Figur 2 dargestellten Deckenradiatorprofil 10b im Wesentlichen dadurch unterscheidet, dass die Nuten 32, 33 nicht zu der gegenüberliegenden Strahlfläche 40, sondern zu der von der Strahlfläche 40 abgewandten Außenfläche der Strahlfläche 30 geöffnet sind. Die Öffnungen der Nuten 32, 33, liegend dabei vorzugsweise in der Ebene der Strahlfläche 30. In analoger Weise sind die Nuten 42, 43 zu der der Strahlfläche 30 abgewandten Außenfläche der Strahlfläche 40 geöffnet, wobei die Öffnungen der Nuten 42, 43 vorzugsweise in der Ebene der Strahlfläche 40 liegen. Als weiterer Unterschied können die freien Außenkanten der Strahlflächen 30, 40 zur jeweils gegenüberliegenden Strahlfläche 40, 30 abgewinkelt ausgebildet sein.

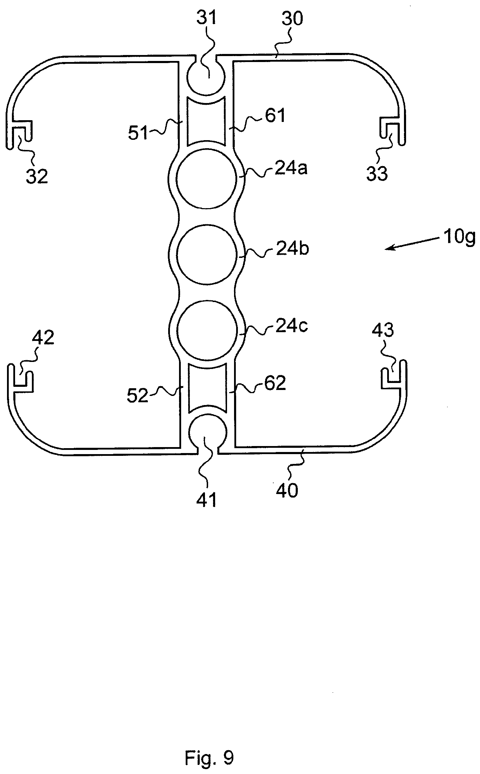

Figur 9 zeigt einen Querschnitt durch ein siebtes nicht erfindungsgemäßes Ausführungsbeispiel eines Deckenradiatorprofils 10g, welches sich von dem in Figur 2 dargestellten Deckenradiatorprofil 10b im Wesentlichen dadurch unterscheidet, dass anstelle des einen Rohres 20 drei parallel zu einander verlaufende Rohre 24a, 24b, 24c zwischen den ersten Abschnitten 51, 61 und den zweiten Abschnitten 52, 62 der Verbindungsstege 50, 60 angeordnet sind.

Zusätzlich können die Nuten 32, 33, 42, 43 statt eines kreisabschnittförmigen Querschnitts auch rechteckigen Querschnitt aufweisen. Eine weiterer Unterschied des in Figur 9 dargestellten Ausführungsbeispiels zu dem in Figur 2 dargestellten Ausführungsbeispiel liegt darin, dass die freien Seitenkanten der Strahlfläche 30 in Richtung auf die Strahlfläche 40 zu gebogen ausgebildet sind, während die freien Seitenkanten der Strahlfläche 40 auf die Strahlfläche 30 zu gebogen ausgebildet sind.

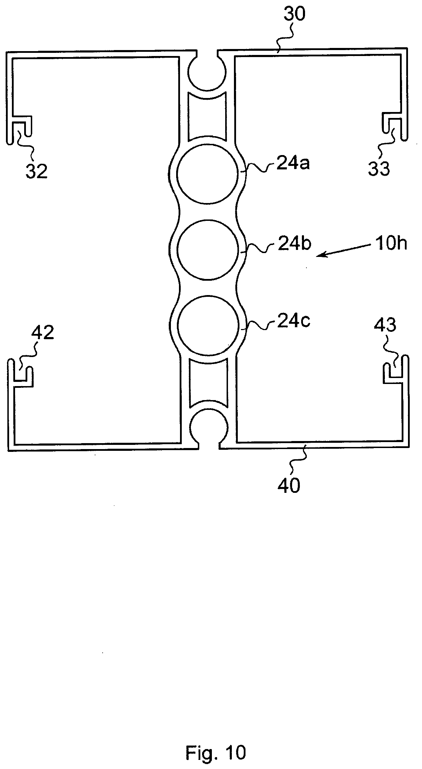

Figur 10 zeigt einen Querschnitt eines achten nicht erfindungsgemäßen Ausführungsbeispiels eines Deckenradiatorprofils 10h, welches sich von dem in Figur 9 dargestellten Ausführungsbeispiel des Deckenradiatorprofils 10g lediglich dadurch unterscheidet, dass die freien Seitenkanten der Strahlfläche 30 statt auf die Strahlfläche 40 zu gebogen zu der Strahlfläche 40 hin abgewinkelt ausgebildet sind. In analoger Weise sind die freien Seitenkanten der Strahlfläche 40 auf die Strahlfläche 30 zu abgewinkelt ausgebildet.

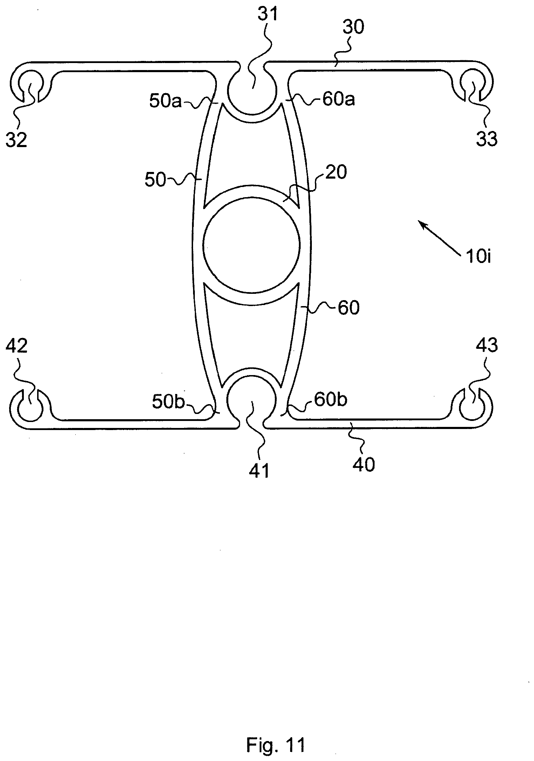

Figur 11 zeigt ein erstes Ausführungsbeispiel eines erfindungsgemäßen Deckenradiatorprofils 10i, welches sich von dem in Figur 2 dargestellten Ausführungsbeispielen des Deckenradiatorprofils 10b dadurch unterscheidet, dass der Verbindungssteg 50 und der zweite Verbindungssteg 60 jeweils direkt die Strahlflächen 30, 40 miteinander verbinden, wobei das Rohr 20 zwischen den beiden Verbindungsstegen 50, 60 angeordnet ist. Der Verbindungssteg 50 weist ein erstes Ende 52a und ein zweites Ende 50b auf, wobei das erste Ende 50a mit der Strahlfläche 30 und das zweite Ende 50b mit der Strahlfläche 40 verbunden ist. Der zweite Verbindungssteg 60 weist ein erstes Ende 60a und ein zweites Ende 60b auf, wobei das erste Ende 60a mit der Strahlfläche 30 und das zweite Ende 60b mit der Strahlfläche 40 verbunden ist. Sowohl der Verbindungssteg 50 als auch der Verbindungssteg 60 grenzen etwa tangential an das Rohr 20 an, insbesondere an etwa diametral gegenüberliegenden Stellen, sodass insbesondere das Rohr 20 zwischen den beiden Verbindungsstegen 50, 60 liegend angeordnet ist. Vorteilhafterweise ist der Verbindungssteg 50 in Bezug auf den zweiten Verbindungssteg 60 und/oder der zweite Verbindungssteg 60 in Bezug auf den Verbindungssteg 50 konvex gekrümmt ausgebildet.

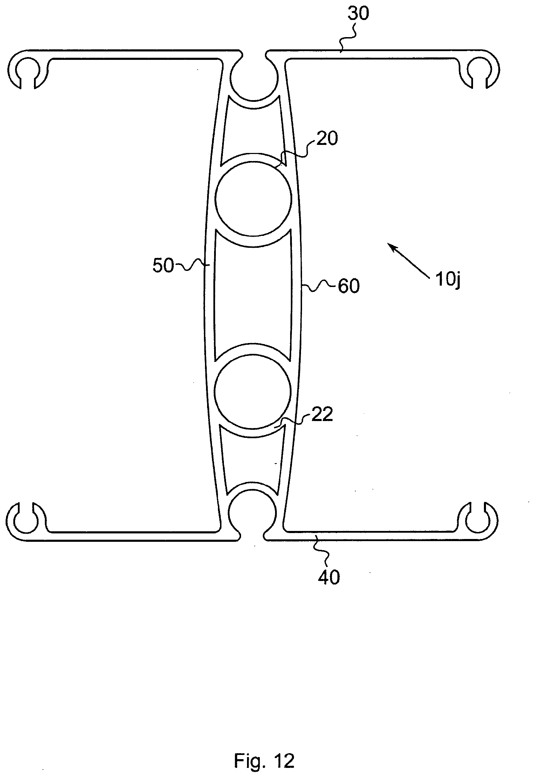

Figur 12 zeigt ein Querschnitt durch ein zweites erfindungsgemäßes Ausführungsbeispiel eines Deckenradiatorprofils 10j, welches sich von dem in Figur 11 dargestellten Deckenradiatorprofil 10i dadurch unterscheidet, dass zwischen den Verbindungsstegen 50, 60 nicht nur ein einzelnes Rohr 20, sondern zwei parallel zueinander verlaufende Rohre 20, 22 angeordnet sind. Der Verbindungssteg 50 liegt an dem Rohr 20 und dem Rohr 22 an, insbesondere etwa tangential. Ebenso liegt der zweite Verbindungssteg 60 sowohl an dem Rohr 20 als auch dem Rohr 22, vorzugsweise etwa tangential, an. Sind die beiden Verbindungsstege 50, 60 im Wesentlichen eben ausgebildet, werden die Rohre 20, 22 jeweils etwa an diametral gegenüberliegenden Stellen von den Verbindungsstegen 50, 60 berührt. Sind die Verbindungsstege 50, 60 konvex gekrümmt ausgebildet, weichen die Berührungsstellen von einer exakten diametralen Ausrichtung geringfügig ab, sind jedoch im Wesentlichen immer noch diametral gegenüberliegend angeordnet.

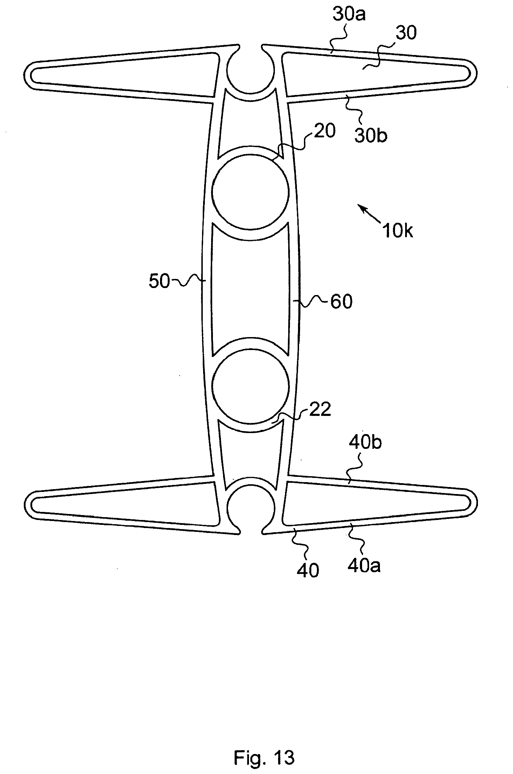

Figur 13 zeigt den Querschnitt durch ein drittes erfindungsgemäßes Ausführungsbeispiel eines Deckenradiatorprofils 10k, welches sich von dem in Figur 12 dargestellten Ausführungsbeispiel des Deckenradiatorprofils 10j im Wesentlichen dadurch unterscheidet, dass die Strahlfläche 30 zwei Elemente 30a, 30b aufweist, die an den Seitenkanten im spitzen Winkel zueinander angeordnet sind und vorzugsweise über eine abgerundete Verbindungsstelle an den Seitenkanten miteinander verbunden sind. Ebenso weist die Strahlfläche 40 zwei Elemente 40a, 40b auf, die an Seitenkanten im spitzen Winkel zueinander angeordnet sind und vorzugsweise über eine abgerundete Verbindungsstelle miteinander verbunden sind. Sowohl die Strahlfläche 30 als auch die Strahlfläche 40 ist damit quasi doppelwandig ausgebildet. Durch die im Winkel zueinander stehenden Elemente 30a, 30b bzw. 40a, 40b kann Kondensat um die abgerundete Verbindungsstelle auf die andere Seite der Strahlfläche 30, 40 geführt werden, ohne abzutropfen, und beispielsweise auf die Verbindungsstege 50, 60 geleitet werden, um dort gegebenenfalls erneut zu verdampfen oder beispielsweise gezielt einer Kondensatabführrinne zugeführt zu werden.

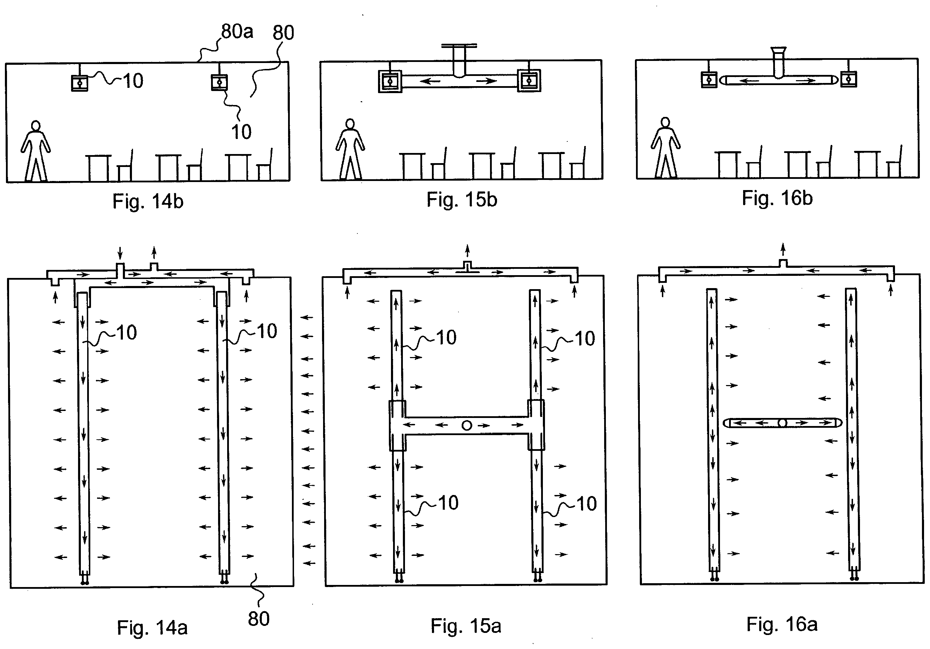

Die Merkmale der anhand der Figuren 1 bis 13 beschriebenen Ausführungsbeispiele der Deckenradiatorprofile 10a bis 10j können beliebig miteinander kombiniert werden, soweit sie sich nicht widersprechen. Insbesondere können in jedem der Profile die Nuten 32, 33, 42, 43 entweder weggelassen oder jede einzeln hinzugefügt werden, mit kreisförmigen oder rechteckigem oder sonstigen Querschnitt ausgebildet werden, zur Innenseite oder zur Außenseite offen ausgebildet sein und in der Ebene der jeweiligen Strahlfläche 30, 40 liegend oder an auf die jeweils andere Strahlfläche 40, 30 zu gekrümmten oder abgewinkelten Enden ausgebildet sein. In jedem der Ausführungsbeispiele kann auch die Zahl der Rohre 20 variieren. Weiterhin kann in jedem der Ausführungsbeispiele jede der Strahlflächen 30, 40 eben oder abschnittsweise oder vollständig gekrümmt ausgebildet sein. Die Figuren 14 bis 16 zeigen beispielhaft verschiedene Anordnungen der Deckenradiatorprofile 10a bis 10j oder beliebiger Kombinationen davon, wobei im Folgenden das Deckenradiatorprofil mit 10 bezeichnet wird.

Figur 14 zeigt einen Raum 80 mit einer Decke 80a, an welcher zwei Deckenradiatorprofile 10 vorzugsweise parallel zueinander angeordnet sind. Die Deckenradiatorprofile 10 können in beliebiger Länge vorzugsweise als Strangpressprofil hergestellt werden und sind insbesondere aus Aluminium gefertigt. Bei größerer gewünschter Länge können mehrere Deckenradiatorprofilelemente stirnseitig miteinander verbunden werden. Der Raum 80 kann ein beliebiger Raum eines Gebäudes sein. Beispielhaft ist in den Figuren 14a, 14b, 15a, 15b, 16a und 16b ein Klassenzimmer einer Schule oder ähnliches dargestellt, wobei mittels der Deckenradiatorprofile 10 auch größere Räume 80 wie Hallen oder ähnliches beheizt oder gekühlt werden können.

An die Deckenradiatorprofile 10 wird einerseits eine Fluidversorgung angeschlossen, mittels welcher Heizmedium oder Kühlmedium, insbesondere eine entsprechende Flüssigkeit, durch die Rohre 20 bzw. 22 oder 24a, 24b, 24c der Deckenradiatorprofile 10 geführt werden kann. Alternativ wird das Rohr 20 bzw. 22 oder 24a, 24b, 24c der Deckenradiatorprofile 10 mit einem Heiz- oder Kühlmedium, beispielsweise Öl, Sand oder Porzellan, zumindest teilweise gefüllt, in weiches ein elektrischer Leiter einer elektrischen Heizung oder Kühlung eingebettet ist.

Zusätzlich ist in Längsrichtung der jedes Deckenradiatorprofils 10 zumindest an einer Stelle eine Luftzufuhr vorgesehen, welche Luft entweder von seitlich oder von stirnseitig auf das Deckenradiatorprofil 10, insbesondere in den zwischen Strahlflächen 30, 40 und dem Verbindungssteg 50, 60 gebildeten Luftführungskanal, bläst. Die Luftströmung verteilt sich entlang des Deckenradiatorprofils 10 und wird aus den Kanälen abgegeben, wie die Pfeile in Figur 14a verdeutlichen, wodurch eine gleichmäßige Verteilung der erwärmten oder gekühlten Luft ermöglicht wird. Bei dem in Figur 14a dargestellten Ausführungsbeispiel wird die Luft von der Stirnseite des Raumes 80 auf die Stirnseite der Deckenradiatorprofile 10 zugeführt.

Die Deckenradiatorprofile 10 werden insbesondere derart an der Decke 80a befestigt, dass die Strahlfläche 30, 40 im Wesentlichen parallel zur Decke 40a ausgerichtet sind, während der eine Verbindungssteg 50 oder die beiden Verbindungsstege 50, 60 im Wesentlichen senkrecht zur Decke 80a ausgerichtet sind. Das Zuführen von Luft erfolgt dabei an einer der Stirnflächen jedes der beiden Deckenradiatorprofile 10.

Die in Figur 15a und 15b dargestellte Anordnung der Deckenradiatorprofile 10 unterscheidet sich von der in Figur 14a und b dargestellten Anordnung im Wesentlichen dadurch, dass die Luftzufuhr nicht an der Stirnseite des Raumes 80 erfolgt, sondern etwa auf halber Länge des Raumes 80 ein Kanal vorgesehen ist, welcher über zwei T-Stücke an Stirnseiten von insgesamt vier Deckenradiatorprofilen 10 Luft in die Luftführungskanäle, welche zwischen den Verbindungsstegen 50, 60 und den Strahlflächen 30, 40 gebildeten Kanälen eingeströmt wird.

Die in den Figuren 16a und 16b dargestellte Anordnung unterscheidet sich dadurch von der in Figur 15a und 15b dargestellten Anordnung, dass die Luftzufuhr lediglich zu einem der beiden an dem Deckenradiatorprofil 10 ausgebildeten Luftführungskanälen erfolgt, indem seitlich in diesen Luftführungskanal geblasen wird, insbesondere durch eine zwischen den beiden parallel zueinander angeordneten Deckenradiatorprofilen 10 angeordnete Luftzuführeinrichtung und somit in die aufeinander zugewandten Luftführungskanäle der beiden Deckenradiatorprofile 10.

### Bezugszeichenliste

- 10: Deckenradiatorprofil
- 10a: Deckenradiatorprofil
- 10b: Deckenradiatorprofil
- 10c: Deckenradiatorprofil
- 10d: Deckenradiatorprofil
- 10e: Deckenradiatorprofil
- 10f: Deckenradiatorprofil
- 10g: Deckenradiatorprofil
- 10h: Deckenradiatorprofil
- 10i: Deckenradiatorprofil
- 10j: Deckenradiatorprofil
- 10k: Deckenradiatorprofil

- 20: Rohr
- 22: Rohr
- 24a: Rohr
- 24b: Rohr
- 24c: Rohr

- 30: Strahlfläche
- 30a: Element
- 30b: Element
- 31: Befestigungsnut
- 32: Nut
- 33: Nut
- 34: Nut
- 35: Nut

- 40: Strahlfläche
- 40a: Element
- 40b: Element
- 41: Befestigungsnut
- 42: Nut
- 43: Nut
- 44: Nut
- 45: Nut

- 50: Verbindungssteg
- 50a: erstes Ende
- 50b: zweites Ende
- 51: erster Abschnitt
- 51a: erstes Ende
- 51b: zweites Ende
- 52: zweiter Abschnitt 52a erstes Ende
- 52b: zweites Ende
- 53: dritter Abschnitt 53a erstes Ende
- 53b: zweites Ende

- 60: zweiter Verbindungssteg
- 60a: erstes Ende
- 60b: zweites Ende
- 61: erster Abschnitt 61a erstes Ende
- 61b: zweites Ende
- 62: zweiter Abschnitt 62a erstes Ende
- 62b: zweites Ende
- 63: dritter Abschnitt 63a erstes Ende
- 63b: zweites Ende

- 70a: Platte
- 70b: Platte
- 80: Raum
- 80a: Decke
- d: Abstand
- xl: Achse
- x2: Achse

## Patentansprüche

1. Deckenradiatorprofil (10, 10a, 10b, 10c, 10d, 10e, 10f, 10g, 10h, 10i, 10j, 10k) für die Beheizung oder Kühlung von Räumen (80) mit wenigstens einem Rohr (20, 22, 24a, 24b, 24c) für ein Heiz- oder Kühlmedium und wenigstens zwei Strahlflächen (30, 40), wobei die zwei Strahlflächen (30, 40) im Wesentlichen parallel zueinander in einem Abstand (d) angeordnet sind und über wenigstens einen ersten Verbindungssteg (50, 60) miteinander verbunden sind, wobei das Rohr (20, 22, 24a, 24b, 24c) in oder an dem wenigstens einen ersten Verbindungssteg (50, 60) angeordnet ist, und wobei die Strahlflächen (30, 40) auch über einen zweiten Verbindungssteg (50, 60) miteinander verbunden sind,
**dadurch gekennzeichnet,**
**dass** der erste und der zweite Verbindungssteg (50, 60) in Bezug aufeinander konvex gewölbt ausgebildet sind.

2. Deckenradiatorprofil nach Anspruch 1,
**dadurch gekennzeichnet,**
**dass** die beiden Strahlflächen (30, 40) mit dem wenigstens einen Verbindungssteg (50, 60) einen Querschnitt mit einer etwa H-förmigen Ausgestaltung aufweisen.

3. Deckenradiatorprofil nach einem der vorhergehenden Ansprüche,
**dadurch gekennzeichnet,**
**dass** der wenigstens eine Verbindungssteg (50, 60) einen ersten Abschnitt (51,62) und einen zweiten Abschnitt (52, 62) aufweist, zwischen welchen das Rohr (20, 24a, 24b, 24c) angeordnet ist.

4. Deckenradiatorprofil nach einem der vorhergehenden Ansprüche,
**dadurch gekennzeichnet,**
**dass** jeder der Verbindungsstege (50, 60) jeweils einen ersten Abschnitt (51, 61) und einen zweiten Abschnitt (52, 62) aufweisen, zwischen welchen das Rohr (20, 24a, 24b, 24c) angeordnet ist.

5. Deckenradiatorprofil nach einem der vorhergehenden Ansprüche,
**dadurch gekennzeichnet,**
**dass** der erste und der zweite Verbindungssteg (50, 60) an dem wenigstens einen Rohr (20, 22) an etwa diametral gegenüberliegenden Stellen anliegen.

6. Deckenradiatorprofil nach einem der vorhergehenden Ansprüche,
**dadurch gekennzeichnet,**
**dass** das Deckenradiatorprofil (10, 10a, 10b, 10c, IOd, IOe, IOf, 10g, 10h, IOi, IOj) ein, zwei oder drei Rohre (20, 22, 24a, 24b, 24c) aufweist.

7. Deckenradiatorprofil nach einem der vorhergehenden Ansprüche,
**dadurch gekennzeichnet,**
**dass** das Deckenradiatorprofil (10, 10a, 10b, 10c, 10d, 10e, 10f, 10g, 10h, 10i, 10j, 10k) spiegelsymmetrisch ausgebildet ist, vorzugsweise sowohl zu einer Achse (xl) parallel zu den Strahlflächen (30, 40) als auch zu einer Achse (x2) senkrecht zu den Strahlflächen (30, 40).

8. Deckenradiatorprofil nach einem der vorhergehenden Ansprüche,
**dadurch gekennzeichnet,**
**dass** die Strahlflächen (30, 40) zwei Stirnkanten und zwei Seitenkanten aufweist und der wenigstens eine Verbindungssteg (50, 60) etwa symmetrisch zwischen den beiden Seitenkanten angeordnet ist.

9. Deckenradiatorprofil nach einem der vorhergehenden Ansprüche,
**dadurch gekennzeichnet,**
**dass** die Strahlflächen (30, 40) im Bereich der zwei Seitenkanten jeweils eine Nut (32, 33, 42, 43) aufweisen, welche vorzugsweise den Querschnitt eines Kreisabschnitts aufweist

10. Deckenradiatorprofil nach einem der vorhergehenden Ansprüche,
**dadurch gekennzeichnet,**
**dass** wenigstens eine der Strahlflächen (30, 40) auf der der jeweils anderen Strahlfläche (40, 30) abgewandten Seite, vorzugsweise in dem Bereich, in welchem auf der der jeweils anderen Strahlfläche (40, 30) zugewandten Seite der wenigstens eine Verbindungssteg (50, 60) angeordnet ist, eine Befestigungsnut (31, 41) aufweist, welche vorzugsweise den Querschnitt eines Kreisabschnitts aufweist.

11. Deckenradiatorprofil nach einem der vorhergehenden Ansprüche,
**dadurch gekennzeichnet,**
**dass** die Strahlflächen (30, 40) jeweils zwei Elemente (30a, 30b, 40a, 40b) aufweisen, die an den Seitenkanten im spitzen Winkel zueinander angeordnet sind und dort vorzugsweise eine abgerundete Verbindungsstelle aufweisen.

12. Deckenradiatorprofil nach einem der vorhergehenden Ansprüche,
**dadurch gekennzeichnet,**
**dass** das Deckenradiatorprofil (10, 10a, 10b, 10c, 10d, 10e, 10f, 10g, 10h, 10i, 10j, 10k) als Strangpressprofil, vorzugsweise aus Aluminium, hergestellt ist.

13. Deckenradiatorprofil nach einem der vorhergehenden Ansprüche,
**dadurch gekennzeichnet,**
**dass** das Deckenradiatorprofil (10, 10a, 10b, 10c, 10d, 10e, 10f, 10g, 10h, 10i, 10j, 10k) eine eloxierte oder lackierte Oberfläche aufweist.

## Claims

1. A ceiling radiator profile (10, 10a, 10b, 10c, 10d, 10e, 10f, 10g, 10h, 10i, 10j, 10k) for heating or cooling rooms (80), the ceiling radiator profile comprising at least one tube (20, 22, 24a, 24b, 24c) for a heating or cooling medium, and at least two radiating surfaces (30, 40), the two radiating surfaces (30, 40) being disposed substantially parallel to one another at a distance (d) and being connected to one another via at least one first connection bridge (50, 60), the tube (20, 22, 24a, 24b, 24c) being disposed in or on the at least one first connection bridge (50, 60), and the radiating surfaces (30, 40) also being connected to one another via a second connection bridge (50, 60),
**characterized in that**
the first and the second connection bridge (50, 60) are convex in relation to one another.

2. The ceiling radiator profile according to claim 1,
**characterized in that**
the two radiating surfaces (30, 40) and the at least one connection bridge (50, 60) have a cross section approximately in the shape of an H.

3. The ceiling radiator profile according to any one of the preceding claims,
**characterized in that**
the at least one connection bridge (50, 60) has a first section (51, 62) and a second section (52, 62) between which the tube (20, 24a, 24b, 24c) is disposed.

4. The ceiling radiator profile according to any one of the preceding claims,
**characterized in that**
each of the connection bridges (50, 60) has a first section (51, 61) and a second section (52, 62) between which the tube (20, 24a, 24b, 24c) is disposed.

5. The ceiling radiator profile according to any one of the preceding claims,
**characterized in that**
the first and the second connection bridge (50, 60) are in contact with the at least one tube (20, 22) at approximately diametrically opposite points.

6. The ceiling radiator profile according to any one of the preceding claims,
**characterized in that**
the ceiling radiator profile (10, 10a, 10b, 10c, 10d, 10e, 10f, 10g, 10h, 10i, 10j) has one, two or three tubes (20, 22, 24a, 24b, 24c).

7. The ceiling radiator profile according to any one of the preceding claims,
**characterized in that**
the ceiling radiator profile (10, 10a, 10b, 10c, 10d, 10e, 10f, 10g, 10h, 10i, 10j, 10k) is symmetrical, preferably to both an axis (x1) which is parallel to the radiating surfaces (30, 40) and an axis (x2) which is perpendicular to the radiating surfaces (30, 40).

8. The ceiling radiator profile according to any one of the preceding claims,
**characterized in that**
the radiating surfaces (30, 40) have two front edges and two lateral edges and that the at least one connection bridge (50, 60) is disposed in an approximately symmetrical manner between the two lateral edges.

9. The ceiling radiator profile according to any one of the preceding claims,
**characterized in that**
the radiating surfaces (30, 40) have a groove (32, 33, 42, 43) in the area of each of the two lateral edges, the groove (32, 33, 42, 43) preferably having the cross section of a circle section.

10. The ceiling radiator profile according to any one of the preceding claims,
**characterized in that**
at least one of the radiating surfaces (30, 40) has a fixing groove (31, 41) on the side which faces away from the other radiating surface (40, 30), preferably in the area in which the at least one connection bridge (50, 60) is disposed on the side which faces the other radiating surface (40, 30), the fixing groove (31, 41) preferably having the cross section of a circle section.

11. The ceiling radiator profile according to any one of the preceding claims,
**characterized in that**
the radiating surfaces (30, 40) each have two elements (30a, 30b, 40a, 40b) which are disposed at an acute angle to one another at the lateral edges and which preferably have a rounded junction there.

12. The ceiling radiator profile according to any one of the preceding claims,
**characterized in that**
the ceiling radiator profile (10, 10a, 10b, 10c, 10d, 10e, 10f, 10g, 10h, 10i, 10j, 10k) is realized as an extrusion profile, preferably made of aluminum.

13. The ceiling radiator profile according to any one of the preceding claims,
**characterized in that**
the ceiling radiator profile (10, 10a, 10b, 10c, 10d, 10e, 10f, 10g, 10h, 10i, 10j, 10k) has an anodized or painted surface.

## Revendications

1. Profil de radiateur de plafond (10, 10a, 10b, 10c, 10d, 10e, 10f, 10g, 10h, 10i, 10j, 10k) pour le chauffage ou le refroidissement de chambres (80), le profil radiateur de plafond comprenant au moins un tube (20, 22, 24a, 24b, 24c) pour un agent de chauffage ou de refroidissement at au moins deux surfaces de radiation (30, 40) disposées essentiellement parallèles l'une à l'autre à une distance (d) et reliées l'une à l'autre par au moins une première âme de liaison (50, 60), le tube (20, 22, 24a, 24b, 24c) étant disposé dans ou sur l'au moins une première âme de liaison (50, 60), et les surfaces de radiation (30, 40) étant aussi reliées l'une à l'autre par une deuxième âme de liaison (50, 60),
**caractérisé en ce que**
la première et la deuxième âme de liaison (50, 60) ont une courbure convexe l'une par rapport à l'autre.

2. Profil de radiateur de plafond selon la revendication 1,
**caractérisé en ce que**
les deux surfaces de radiation (30, 40) comprenant l'au moins une âme de liaison (50, 60) ont une section transversale en forme approximative de H.

3. Profil de radiateur de plafond selon l'une quelconque des revendications précédentes,
**caractérisé en ce que**
l'au moins une âme de liaison (50, 60) a une première section (51, 62) et une deuxième section (52, 62), le tube (20, 24a, 24b, 24c) étant disposé entre la première section et la deuxième section.

4. Profil de radiateur de plafond selon l'une quelconque des revendications précédentes,
**caractérisé en ce que**
chaque âme de liaison (50, 60) a une première section (51, 61) et une deuxième section (52, 62), le tube (20, 24a, 24b, 24c) étant disposé entre la première section et la deuxième section.

5. Profil de radiateur de plafond selon l'une quelconque des revendications précédentes,
**caractérisé en ce que**
la première et la deuxième âme de liaison (50, 60) contactent l'au moins un tube (20, 22) à des emplacements approximativement diamétralement opposés.

6. Profil de radiateur de plafond selon l'une quelconque des revendications précédentes,
**caractérisé en ce que**
le profil de radiateur de plafond (10, 10a, 10b, 10c, 10d, 10e, 10f, 10g, 10h, 10i, 10j) a un, deux ou trois tubes (20, 22, 24a, 24b, 24c).

7. Profil de radiateur de plafond selon l'une quelconque des revendications précédentes,
**caractérisé en ce que**
le profil de radiateur de plafond (10, 10a, 10b, 10c, 10d, 10e, 10f, 10g, 10h, 10i, 10j, 10k) est réalisé de manière symétrique, de préférence par rapport à un axe (x1) parallèle aux surfaces de radiation (30, 40) et par rapport à un axe (x2) perpendiculaire aux surfaces de radiation (30, 40).

8. Profil de radiateur de plafond selon l'une quelconque des revendications précédentes,
**caractérisé en ce que**
les surfaces de radiation (30, 40) ont deux bords frontaux et deux bords latéraux et que l'au moins une âme de liaison (50, 60) est disposée de manière approximativement symétrique entre les deux bords latéraux.

9. Profil de radiateur de plafond selon l'une quelconque des revendications précédentes,
**caractérisé en ce que**
les surfaces de radiation (30, 40) ont une rainure (32, 33, 42, 43) dans la région de chacun des deux bords latéraux, la rainure (32, 33, 42, 43) ayant la section transversale d'une section circulaire.

10. Profil de radiateur de plafond selon l'une quelconque des revendications précédentes,
**caractérisé en ce**
**qu'**au moins une des surfaces de radiation (30, 40) a une rainure de fixation (31, 41) du côté détourné de l'autre surface de radiation (40, 30), de préférence dans une région dans laquelle l'au moins une âme de liaison (50, 60) est disposée du côté tourné vers l'autre surface de radiation (40, 30), la rainure de fixation (31, 41) ayant, de préférence,
la section transversale d'une section circulaire.

11. Profil de radiateur de plafond selon l'une quelconque des revendications précédentes,
**caractérisé en ce que**
les surfaces de radiation (30, 40) ont deux éléments (30a, 30b, 40a, 40b) qui sont disposés sur les bords latéraux et qui forment un angle aigu l'un par rapport à l'autre et qui ont, de préférence, une jonction arrondie.

12. Profil de radiateur de plafond selon l'une quelconque des revendications précédentes,
**caractérisé en ce que**
le profil de radiateur de plafond (10, 10a, 10b, 10c, 10d, 10e, 10f, 10g, 10h, 10i, 10j, 10k) est réalisé comme profil extrudé, de préférence en aluminium.

13. Profil de radiateur de plafond selon l'une quelconque des revendications précédentes,
**caractérisé en ce que**
le profil de radiateur de plafond (10, 10a, 10b, 10c, 10d, 10e, 10f, 10g, 10h, 10i, 10j, 10k) a une surface anodisée ou vernie.
